# FASCICULE DE BREVET EUROPEEN

(11) **EP 4 001 120 B1**
(45) Date de publication et mention de la délivrance du brevet: **20.03.2024**
(21) Numéro de dépôt: 21209043.5
(22) Date de dépôt: 18.11.2021
(51) Int. Cl.: B64D 29/06

(54) **ASSEMBLAGE POUR UN AÉRONEF COMPORTANT UN MÂT ET UNE NACELLE COMPORTANT UNE CASQUETTE ÉQUIPÉE DE SYSTÈMES DE MISE EN TENSION ET DE SYSTÈMES DE CENTRAGE**
BAUGRUPPE FÜR EIN LUFTFAHRZEUG MIT EINEM MAST UND EINER GONDEL, DIE EINE HAUBE UMFASST, DIE MIT SPANN- UND ZENTRIERSYSTEMEN AUSGESTATTET IST
ASSEMBLY FOR AN AIRCRAFT COMPRISING A MAST AND A NACELLE COMPRISING A CAP PROVIDED WITH TENSIONING SYSTEMS AND CENTRING SYSTEMS

(30) Priorité: 24.11.2020 FR 2012076
(43) Date de publication de la demande: 25.05.2022
(73) Titulaire: Airbus Operations (S.A.S.), 31060 Toulouse Cedex 9 (FR)
(72) Inventeur: GONCALVES, José, TOULOUSE (FR)
(74) Mandataire: Cabinet Le Guen Maillet

(56) Documents cités:
- EP-A1- 1 535 840
- EP-A1- 3 670 350
- FR-A1- 3 081 837
- US-A- 3 109 214
- US-A- 3 318 622

## Description

### DOMAINE TECHNIQUE

La présente invention concerne un assemblage pour un aéronef, où l'assemblage comporte un mât et une nacelle qui elle-même comporte une casquette équipée de systèmes de mise en tension et de systèmes de centrage, ainsi qu'un aéronef comportant un tel assemblage.

### ÉTAT DE LA TECHNIQUE ANTÉRIEURE

Un aéronef comporte classiquement un fuselage de part et d'autre duquel est fixée une aile. Chaque aile supporte au moins un mât d'accrochage qui supporte à son tour une nacelle et un moteur formant une turbomachine. La nacelle forme la surface aérodynamique qui entoure le moteur. Le mât d'accrochage est fixé entre la structure de l'aile et la nacelle.

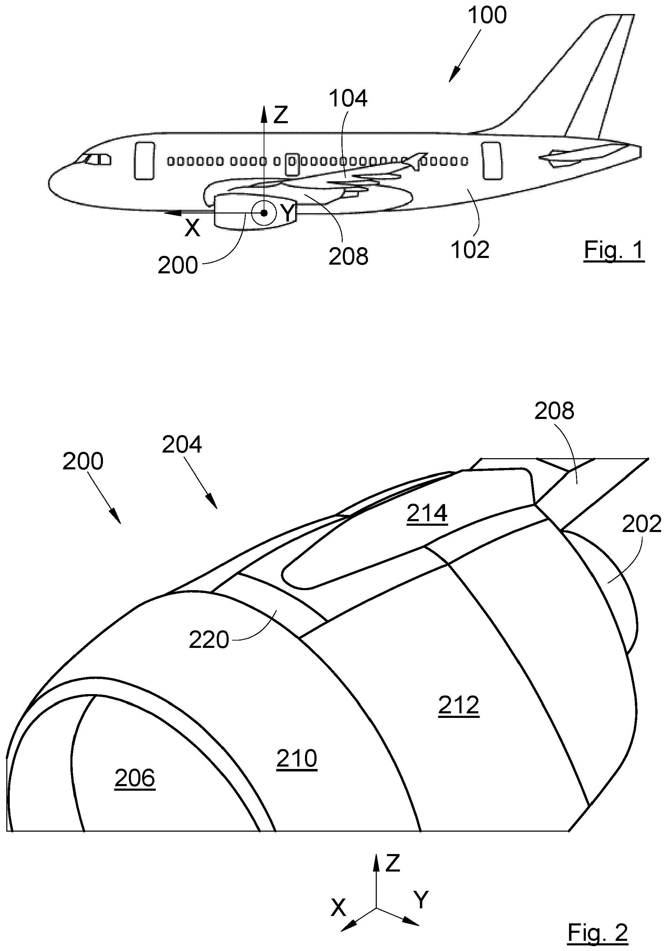

La Fig. 2 montre une vue en perspective d'un système de propulsion 200 comportant un moteur 202 représenté ici par sa tuyère, et une nacelle 204. La nacelle 204 présente une entrée d'air 206 et elle est fixée à l'aile par le mât 208.

La nacelle 204 comporte une structure qui se fixe au mât 208 et qui porte une pluralité de capots parmi lesquels on trouve un capot d'entrée d'air 210 qui entoure l'entrée d'air 206, des capots latéraux 212, en particulier des capots de soufflante et des capots d'inversion de poussée, qui sont de part et d'autre de la nacelle 204, un capot supérieur 214 assurant le carénage autour de la jonction entre le mât 208 et la structure de la nacelle 204.

La nacelle 204 comporte également une casquette 220 qui est un capot ayant un rôle aérodynamique et qui assure la liaison aérodynamique entre le capot d'entrée d'air 210, les capots latéraux 212 et le capot supérieur 214.

Dans le cas de l'état de la technique, la fixation de la casquette 220 est assurée par des moyens de fixation relativement encombrants et complexes.

Il est donc nécessaire de trouver un mode de réalisation qui permet de limiter l'encombrement des moyens de fixation et d'assurer un montage et un réglage facilités.

Des exemples de l'art antérieur sont présentés dans les documents EP3670350 A1, EP1535840 A1 et FR3081837 A1.

### EXPOSÉ DE L'INVENTION

Un objet de la présente invention est de proposer un assemblage pour un d'aéronef, où l'assemblage comporte un mât et une nacelle comportant une casquette équipée d'un système de mise en tension et d'un système de centrage qui soient simples et faciles à mettre en oeuvre.

À cet effet, est proposé un assemblage pour un aéronef, ledit assemblage comportant un mât et une nacelle de forme générale cylindrique destinée à entourer un moteur de l'aéronef,
où la nacelle présente un plan médian et comporte :
   - une structure fixée au mât au niveau d'une jonction entre le mât et ladite structure,
   - un capot d'entrée d'air qui entoure une entrée d'air de la nacelle,
   - des capots latéraux disposés de part et d'autre du plan médian de la nacelle,
   - un capot supérieur assurant le carénage autour de ladite jonction,
   - une casquette constituée d'un capot arqué assurant une liaison aérodynamique entre le capot d'entrée d'air, les capots latéraux et le capot supérieur, et
   - des moyens de fixation comportant deux systèmes de centrage et deux systèmes de mise en tension, où les deux systèmes de mise en tension sont disposés de part et d'autre du plan médian de la nacelle et entre les deux systèmes de centrage,
où chaque système de mise en tension comporte :
   - une première ferrure fixée à la structure,
   - une deuxième ferrure fixée à la casquette,
   - une tige filetée dont une première extrémité est montée articulée sur la deuxième ferrure,
   - un élément ressort, et
   - un moyen d'arrêt,
où la première ferrure présente une paroi d'enclenchement traversée par un orifice et présentant une face orientée vers la deuxième ferrure et une face opposée,
où la tige filetée traverse l'orifice, où l'élément ressort est emmanché sur la tige filetée et positionné du côté de la face de la paroi d'enclenchement qui est opposée à la deuxième ferrure et où le moyen d'arrêt bloque le déplacement de l'élément ressort,
où chaque système de centrage comporte :
   - une première ferrure fixée à la structure, et
   - une deuxième ferrure fixée à la casquette,
où l'une des ferrures présente un alésage, et l'autre des ferrures porte un arbre qui loge dans l'alésage.

Avec une telle installation, l'encombrement des moyens de fixation est réduit.

Avantageusement, l'articulation de la tige filetée est réalisée par un système de rotule monté sur la deuxième ferrure du moyen d'arrêt.

Avantageusement, l'élément ressort est un empilement de rondelles Belleville.

Avantageusement, le moyen d'arrêt est constitué de deux écrous vissés sur la deuxième extrémité de la tige filetée.

Avantageusement, l'arbre prend la forme d'une tige filetée et le système de centrage comporte un écrou qui se visse sur la tige filetée en prenant en sandwich la première ferrure, respectivement la deuxième ferrure du système de centrage.

L'invention propose également un aéronef comportant un assemblage selon l'une des variantes précédentes.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
Fig. 1 est une vue de côté d'un aéronef selon l'invention,
Fig. 2 est une vue en perspective d'une nacelle, et
Fig. 3 est une vue en perspective et de face d'une casquette selon l'invention,
Fig. 4 est une vue de face d'un système de mise en tension selon l'invention,
Fig. 5 est une vue en coupe selon la ligne V-V de la Fig. 4,
Fig. 6 est une vue de face et en coupe d'un système de centrage selon l'invention, et
Fig. 7 est un agrandissement du détail VII de la Fig. 6.

### EXPOSÉ DÉTAILLÉ DE MODES DE RÉALISATION

Dans la description qui suit, les termes relatifs à une position sont pris en référence à une nacelle montée sur un aéronef en marche avant, c'est-à-dire comme elle est représentée sur la Fig. 1.

La Fig. 1 montre un aéronef 100 qui comporte un fuselage 102 de part et d'autre duquel est fixée une aile 104. Sous chaque aile 104 est fixé un mât d'accrochage 208 auquel est accroché un système de propulsion 200 qui comporte une nacelle qui est de forme générale cylindrique et un moteur entouré par la nacelle. Un assemblage selon l'invention comporte ainsi le mât 208 et la nacelle.

Dans la description qui suit, et par convention, on appelle X l'axe longitudinal de la nacelle orienté positivement dans le sens d'avancement de l'aéronef 100 et qui est également parallèle à l'axe longitudinal de l'aéronef 100, on appelle Y l'axe transversal de la nacelle qui est horizontal lorsque l'aéronef 100 est au sol, et Z l'axe vertical ou hauteur verticale lorsque l'aéronef 100 est au sol, ces trois directions X, Y et Z étant orthogonales entre elles et formant un repère orthonormé. La nacelle présente ainsi un plan médian longitudinal XZ qui est ici vertical et parallèle à l'axe longitudinal X et sépare la nacelle en deux parties gauche et droite.

La Fig. 2 montre une vue en perspective d'un système de propulsion 200 qui est similaire à celui de l'état de la technique puisque seuls les moyens de fixation de la casquette 220 sont différents.

Ainsi, le système de propulsion comporte le moteur 202 et la nacelle 204 dont la structure est fixée au mât 208 au niveau d'une jonction entre le mât 208 et ladite structure. Dans l'exemple de réalisation de la Fig. 2, la nacelle 204 comporte, fixée sur sa structure, plusieurs capots (ou carénages) afin de réaliser une surface aérodynamique.

La nacelle 204 comprend ainsi autour de son entrée d'air 206, un capot d'entrée d'air 210, et la nacelle 204 comporte également de part et d'autre du plan médian XZ de la nacelle 204, des capots latéraux 212 et au-dessus de la nacelle 204, un capot supérieur 214 assurant le carénage autour de la jonction entre le mât 208 et ladite structure.

La nacelle 204 comporte une casquette 220 ayant un rôle aérodynamique et qui est constitué d'un capot arqué assurant une liaison aérodynamique entre le capot d'entrée d'air 210, les capots latéraux 212 et le capot supérieur 214. Le capot est arqué pour se conformer à la forme de la nacelle 204.

La casquette 220 est fixée par des moyens de fixation comportant des systèmes de centrage et des systèmes de mise en tension qui assurent le positionnement de la casquette 220 et son placage.

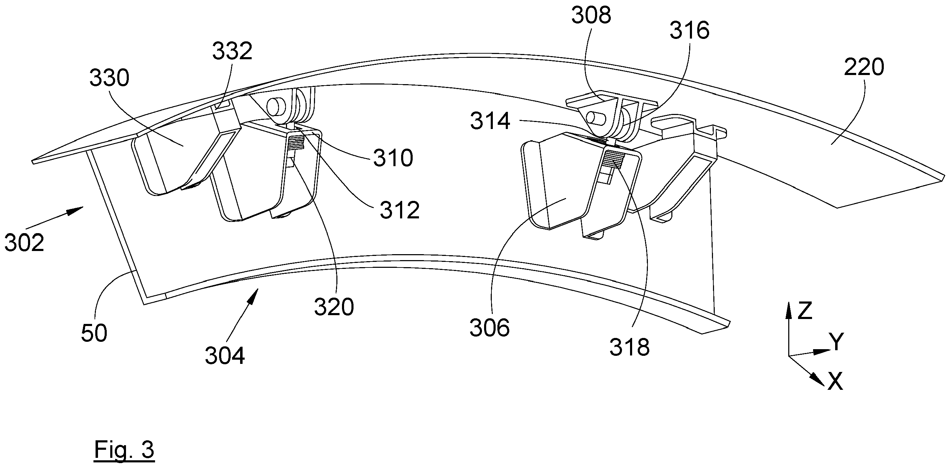

La Fig. 3 montre la casquette 220 où les moyens de fixation comportent deux systèmes de centrage 302 et deux systèmes de mise en tension 304.

Comme cela est représenté sur la Fig. 3, les deux systèmes de mise en tension 304 sont disposés de part et d'autre du plan médian de la nacelle 204 et entre les deux systèmes de centrage 302.

Cet arrangement confère la possibilité de déplacer la casquette 220 autour de l'axe transversal Y avec la tenue de celle-ci en Z pour éviter l'arrachement.

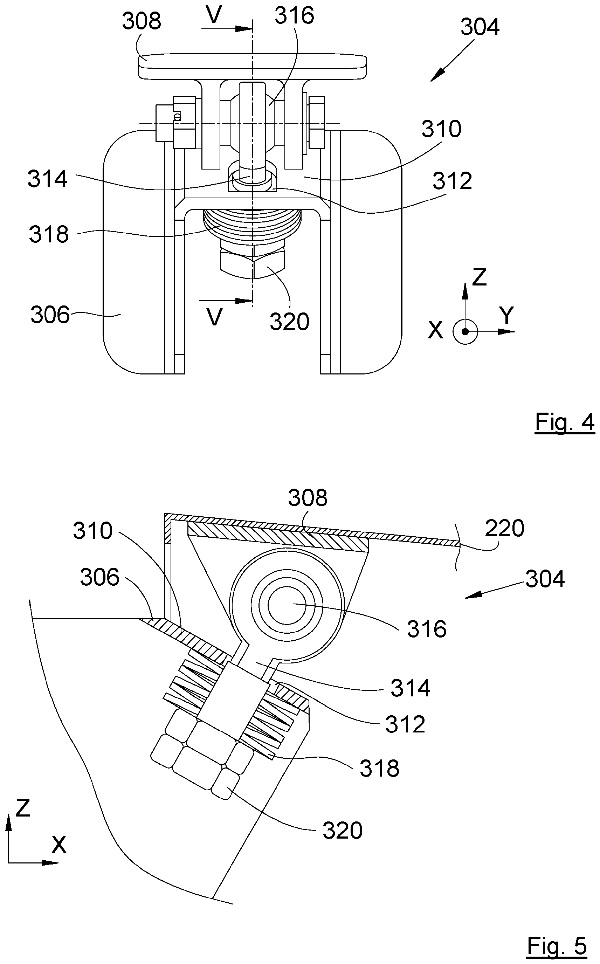

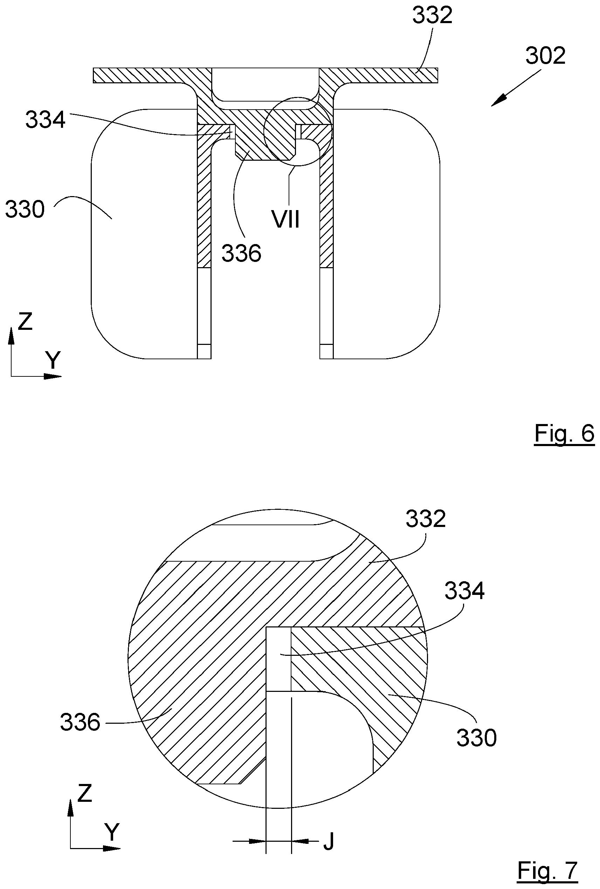

Les Figs. 4 et 5 montrent un système de mise en tension 304 et les Figs. 6 et 7 montrent un système de centrage 302.

Le système de mise en tension 304 comporte une première ferrure 306 fixée à la structure de la nacelle 204 et une deuxième ferrure 308 fixée à la casquette 220. La structure de la nacelle 204 est représentée ici par une paroi 50 qui peut être une paroi directement issue de la structure ou une paroi issue d'un autre capot qui est par ailleurs fixée à la structure.

La première ferrure 306 présente une paroi d'enclenchement 310 traversée par un orifice 312. La paroi d'enclenchement 310 présente une face orientée vers la deuxième ferrure 308 et une face opposée.

Le système de mise en tension 304 comporte également la tige filetée 314 dont une première extrémité est montée articulée sur la deuxième ferrure 308. L'articulation de la tige filetée 314 est réalisée ici par un système de rotule 316 monté sur la deuxième ferrure 308 et dont la première extrémité de la tige filetée 314 est solidaire. La mise en place du système de rotule 316 autorise plus de degrés de liberté.

Le système de mise en tension 304 comporte également un élément ressort 318 qui s'emmanche sur la tige filetée 314 et un moyen d'arrêt 320 qui assure le maintien de l'élément ressort 318 sur la tige filetée 314.

Une fois que le système de mise en tension 304 est installé, la tige filetée 314 traverse l'orifice 312, l'élément ressort 318 est emmanché sur la tige filetée 314 et positionné du côté de la face de la paroi d'enclenchement 310 qui est opposée à la deuxième ferrure 308 et le moyen d'arrêt 320 bloque le déplacement de l'élément ressort 318.

Comme cela est mieux vu sur la Fig. 5, l'élément ressort 318 est mis en tension par serrage entre la paroi d'enclenchement 310 et le moyen d'arrêt 320.

L'élément ressort 318 peut être par exemple un ressort de compression ou, comme ici, un empilement de rondelles Belleville.

Dans le mode de réalisation de l'invention présenté sur les Figs. 3 à 5, le moyen d'arrêt 320 est constitué de deux écrous vissés sur la deuxième extrémité de la tige filetée 314, mais il peut être constitué par tout autre élément assurant le maintien de l'élément ressort 318.

Plus la tension dans l'élément ressort 318 est importante, plus la force de rappel qui s'exerce sur la casquette 220 est importante. Le système de mise en tension 304 peut ainsi compenser les efforts d'aspiration qui s'exercent sur la casquette 220. La tension de l'élément ressort 318 peut être modifiée en changeant ledit élément ressort 318 ou en modifiant le serrage des écrous du moyen d'arrêt 320.

Le système de centrage 302 comporte une première ferrure 330 fixée à la structure de la nacelle 204 et une deuxième ferrure 332 fixée à la casquette 220.

L'une des ferrures, ici la première ferrure 330, présente un alésage 334, et l'autre des ferrures, ici la deuxième ferrure 332, porte un arbre 336 qui loge dans l'alésage 334. L'axe de l'alésage 334 et l'axe de l'arbre 336 sont parallèles lorsque l'arbre 336 est introduit dans l'alésage 334 et ces axes sont globalement parallèles à la direction que la casquette 220 suit lors de sa mise en place.

L'introduction de chaque arbre 336 dans l'alésage 334 associé permet de positionner la casquette 220. La rotation en X de la casquette 220 vis-à-vis de l'entrée d'air est limitée par les deux arbres 336 installés de part et d'autre de la casquette 220.

En même temps que chaque système de centrage 302 est mis en place, la mise en place du système de mise en tension 304 consiste à introduire la tige filetée 314 dans l'orifice 312, à positionner l'élément ressort 318 le long de la tige filetée 314 en le plaquant contre la face de la paroi d'enclenchement 310 qui est opposée à la deuxième ferrure 308, puis à mettre en place le moyen d'arrêt 320 au niveau de la deuxième extrémité de la tige filetée 314.

Les moyens de fixation sont ainsi relativement peu encombrants puisque les systèmes de centrage 302 et les systèmes de mise en tension 304 sont, pour partie, embarqués sur la casquette 220 et dans la mesure où tous les systèmes sont concentrés autour de la casquette 220, le montage et le réglage sont facilités.

Dans le mode de réalisation de l'invention présenté ici, le positionnement de l'élément ressort 318 le long de la tige filetée 314 consiste à emmancher les rondelles Belleville par la deuxième extrémité de la tige filetée 314.

Dans le mode de réalisation de l'invention présenté ici, la mise en place du moyen d'arrêt 320 consiste à visser les deux écrous.

La Fig. 7 montre le jeu `J' existant entre le diamètre de l'alésage 334 et le diamètre de l'arbre 336. La valeur de ce jeu 'J' permet de gérer la position de la casquette 220.

Dans le mode de réalisation de l'invention présenté ici, l'alésage 334 et l'arbre 336 sont circulaires pour avoir le même jeu 'J' selon toutes les directions, en particulier X et Y, mais pour gérer des jeux `J' différents en fonction de la direction, il est possible d'adapter la forme de l'alésage 334 et/ou de l'arbre 336.

Pour renforcer la force de maintien de la casquette 220, l'arbre 336 peut prendre la forme d'une tige filetée et le système de centrage 302 comporte alors un écrou qui se visse sur la tige filetée en prenant en sandwich la première ferrure 330, respectivement la deuxième ferrure 332.

## Revendications

1. Assemblage pour un aéronef (100), ledit assemblage comportant un mât (208) et une nacelle (204) de forme générale cylindrique destinée à entourer un moteur (202) de l'aéronef (100),
où la nacelle (204) présente un plan médian (XZ) et comporte :
- une structure fixée au mât (208) au niveau d'une jonction entre le mât (208) et ladite structure,
- un capot d'entrée d'air (210) qui entoure une entrée d'air (206) de la nacelle (204),
- des capots latéraux (212) disposés de part et d'autre du plan médian de la nacelle (204),
- un capot supérieur (214) assurant le carénage autour de ladite jonction,
- une casquette (220) constitué d'un capot arqué assurant une liaison aérodynamique entre le capot d'entrée d'air (210), les capots latéraux (212) et le capot supérieur (214), et
- des moyens de fixation comportant deux systèmes de centrage (302) et deux systèmes de mise en tension (304), où les deux systèmes de mise en tension (304) sont disposés de part et d'autre du plan médian de la nacelle (204) et entre les deux systèmes de centrage (302),
où chaque système de mise en tension (304) comporte :
- une première ferrure (306) fixée à la structure,
- une deuxième ferrure (308) fixée à la casquette (220),
- une tige filetée (314) dont une première extrémité est montée articulée sur la deuxième ferrure (308),
- un élément ressort (318), et
- un moyen d'arrêt (320),
où la première ferrure (306) présente une paroi d'enclenchement (310) traversée par un orifice (312) et présentant une face orientée vers la deuxième ferrure (308) et une face opposée,
où la tige filetée (314) traverse l'orifice (312), où l'élément ressort (318) est emmanché sur la tige filetée (314) et positionné du côté de la face de la paroi d'enclenchement (310) qui est opposée à la deuxième ferrure (308) et où le moyen d'arrêt (320) bloque le déplacement de l'élément ressort (318),
où chaque système de centrage (302) comporte :
- une première ferrure (330) fixée à la structure, et
- une deuxième ferrure (332) fixée à la casquette (220),
où l'une des ferrures présente un alésage (334), et l'autre des ferrures porte un arbre (336) qui loge dans l'alésage (334).

2. Assemblage selon la revendication 1, **caractérisé en ce que** l'articulation de la tige filetée (314) est réalisée par un système de rotule (316) monté sur la deuxième ferrure (308) du moyen d'arrêt (320).

3. Assemblage selon l'une des revendications 1 ou 2, **caractérisé en ce que** l'élément ressort (318) est un empilement de rondelles Belleville.

4. Assemblage selon l'une des revendications 1 à 3, **caractérisé en ce que** le moyen d'arrêt (320) est constitué de deux écrous vissés sur la deuxième extrémité de la tige filetée (314).

5. Assemblage selon l'une des revendications 1 à 4, **caractérisé en ce que** l'arbre (336) prend la forme d'une tige filetée et **en ce que** le système de centrage (302) comporte un écrou qui se visse sur la tige filetée en prenant en sandwich la première ferrure (330), respectivement la deuxième ferrure (332) du système de centrage (302).

6. Aéronef (100) comportant un assemblage selon l'une des revendications précédentes.

## Patentansprüche

1. Baugruppe für ein Luftfahrzeug (100), wobei die Baugruppe einen Pylon (208) und eine Gondel (204) mit einer allgemeinen zylindrischen Form, die dazu bestimmt ist, ein Triebwerk (202) des Luftfahrzeugs (100) zu umgeben, umfasst,
wobei die Gondel (204) eine Mittelebene (XZ) aufweist und umfasst:
- eine Struktur, die an dem Pylon (208) an einer Verbindungsstelle zwischen dem Pylon (208) und der Struktur befestigt ist,
- eine Lufteinlasshaube (210), die einen Lufteinlass (206) der Gondel (204) umgibt,
- Seitenhauben (212), die beiderseits der Mittelebene der Gondel (204) angeordnet sind,
- eine obere Haube (214), welche die Verkleidung um die Verbindungsstelle herum sicherstellt,
- eine aus einer bogenförmigen Haube bestehende Kappe (220), die eine aerodynamische Verbindung zwischen der Lufteinlasshaube (210), den Seitenhauben (212) und der oberen Haube (214) sicherstellt, und
- Befestigungsmittel, die zwei Zentriersysteme (302) und zwei Spannsysteme (304) umfassen, wobei die zwei Spannsysteme (304) beiderseits der Mittelebene der Gondel (204) und zwischen den zwei Zentriersystemen (302) angeordnet sind,
wobei jedes Spannsystem (304) umfasst:
- ein erstes Beschlagteil (306), das an der Struktur befestigt ist,
- ein zweites Beschlagteil (308), das an der Kappe (220) befestigt ist,
- einen Gewindebolzen (314), von dem ein erstes Ende am zweiten Beschlagteil (308) angelenkt ist,
- ein Federelement (318) und
- ein Arretiermittel (320),
wobei das erste Beschlagteil (306) eine Rastwand (310) aufweist, die von einer Öffnung (312) durchquert wird und eine dem zweiten Beschlagteil (308) zugewandte Fläche und eine gegenüberliegende Fläche aufweist,
wobei der Gewindebolzen (314) die Öffnung (312) durchquert, wobei das Federelement (318) auf den Gewindebolzen (314) aufgeschoben ist und auf der Seite der Fläche der Rastwand (310) positioniert ist, die dem zweiten Beschlagteil (308) gegenüberliegt, und wobei das Arretiermittel (320) die Verschiebung des Federelements (318) blockiert,
wobei jedes Zentriersystem (302) umfasst:
- ein erstes Beschlagteil (330), das an der Struktur befestigt ist, und
- ein zweites Beschlagteil (332), das an der Kappe (220) befestigt ist,
wobei eines der Beschlagteile eine Bohrung (334) aufweist und das andere Beschlagteil eine Welle (336) trägt, die in der Bohrung (334) aufgenommen ist.

2. Baugruppe nach Anspruch 1, **dadurch gekennzeichnet, dass** das Gelenk des Gewindebolzens (314) von einem Kugelgelenksystem (316) gebildet wird, das am zweiten Beschlagteil (308) des Arretiermittels (320) angebracht ist.

3. Baugruppe nach einem der Ansprüche 1 oder 2, **dadurch gekennzeichnet, dass** das Federelement (318) ein Stapel von Federscheiben ist.

4. Baugruppe nach einem der Ansprüche 1 bis 3, **dadurch gekennzeichnet, dass** das Arretiermittel (320) aus zwei Muttern besteht, die auf das zweite Ende des Gewindebolzens (314) aufgeschraubt sind.

5. Baugruppe nach einem der Ansprüche 1 bis 4, **dadurch gekennzeichnet, dass** die Welle (336) die Form eines Gewindebolzens aufweist, und dadurch, dass das Zentriersystem (302) eine Mutter umfasst, die auf den Gewindebolzen aufgeschraubt wird und dabei das erste Beschlagteil (330) bzw. das zweite Beschlagteil (332) des Zentriersystems (302) sandwichartig einschließt.

6. Luftfahrzeug (100), welches eine Baugruppe nach einem der vorhergehenden Ansprüche umfasst.

## Claims

1. Assembly for an aircraft (100), said assembly having a pylon (208) and a generally cylindrical nacelle (204) intended to surround an engine (202) of the aircraft (100),
wherein the nacelle (204) has a median plane (XZ) and comprises:
- a structure that is attached to the pylon (208) at a junction between the pylon (208) and said structure,
- an air-intake cowl (210) that surrounds an air intake (206) of the nacelle (204),
- lateral cowls (212) disposed on either side of the median plane of the nacelle (204),
- an upper cowl (214) providing the fairing around said junction,
- a visor (220) composed of an arcuate cowl that aerodynamically links the air-intake cowl (210), the lateral cowls (212) and the upper cowl (214), and
- attachment means comprising two centring systems (302) and two tensioning systems (304), wherein the two tensioning systems (304) are disposed on either side of the median plane of the nacelle (204) and between the two centring systems (302),
wherein each tensioning system (304) comprises:
- a first fitting (306), which is attached to the structure,
- a second fitting (308), which is attached to the visor (220),
- a threaded rod (314), a first end of which is mounted articulated on the second fitting (308),
- a spring element (318), and
- an arresting means (320),
wherein the first fitting (306) has an engagement wall (310) through which an orifice (312) passes and which has a face that is oriented towards the second fitting (308) and an opposite face,
wherein the threaded rod (314) passes through the orifice (312), wherein the spring element (318) is fitted on the threaded rod (314) and positioned by the face of the engagement wall (310) that is opposite from the second fitting (308) and wherein the arresting means (320) prevents movement of the spring element (318),
wherein each centring system (302) comprises:
- a first fitting (330), which is attached to the structure, and
- a second fitting (332), which is attached to the visor (220),
wherein one of the fittings has a bore (334), and the other fitting bears a shaft (336) that is accommodated in the bore (334).

2. Assembly according to Claim 1, **characterized in that** the articulation of the threaded rod (314) is implemented by a ball-joint system (316) mounted on the second fitting (308) of the arresting means (320).

3. Assembly according to any one of Claims 1 or 2, **characterized in that** the spring element (318) is a stack of Belleville washers.

4. Assembly according to any one of Claims 1 to 3, **characterized in that** the arresting means (320) is composed of two nuts screwed onto the second end of the threaded rod (314).

5. Assembly according to any one of Claims 1 to 4, **characterized in that** the shaft (336) takes the form of a threaded rod and **in that** the centring system (302) comprises a nut which is screwed onto the threaded rod, sandwiching the first fitting (330) or respectively the second fitting (332) of the centring system (302).

6. Aircraft (100) having an assembly according to one of the preceding Claims.
